(19) Europäisches Patentamt
European Patent Office
Office européen des brevets

(11) **EP 1 876 151 A1**

(12) **EUROPEAN PATENT APPLICATION**
published in accordance with Art. 153(4) EPC

(43) Date of publication:
**09.01.2008 Bulletin 2008/02**

(51) Int Cl.:
**C03C 17/23** *(2006.01)*  **C03C 17/34** *(2006.01)*
**B32B 17/00** *(2006.01)*  **A47B 81/06** *(2006.01)*
**A47B 96/20** *(2006.01)*  **A47B 13/08** *(2006.01)*

(21) Application number: **06729538.6**

(22) Date of filing: **20.03.2006**

(86) International application number:
**PCT/JP2006/305570**

(87) International publication number:
**WO 2006/109450 (19.10.2006 Gazette 2006/42)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.04.2005 JP 2005108362**

(71) Applicant: **MATSUSHITA ELECTRIC INDUSTRIAL CO., LTD.**
**Osaka 571-8501 (JP)**

(72) Inventor: **MORITA, Yuusukec/o Matsushita Electric Indus**
**Chuo-ku ,Osaka 540-6207 (JP)**

(74) Representative: **Ehlers, Jochen et al**
**Eisenführ, Speiser & Partner**
**Patentanwälte Rechtsanwälte**
**Postfach 10 60 78**
**28060 Bremen (DE)**

(54) **GLASS PLATE AND TELEVISION STAND**

(57) A coloring layer (110) is laminated on one surface of a plate glass substrate (101). The coloring layer (110) includes a complementary color component that is a complementary color of a reflection spectrum of the glass substrate (101). Thereby, when the glass plate (100) is viewed from a side opposite to the side to which the coloring layer (110) is laminated, the color of the glass substrate (101) is hardly visible.

FIG. 1

EP 1 876 151 A1

**Description**

Technical Field

The present invention relates to a glass plate, and more particularly to a glass plate in which the color of the glass material hardly stands out. The present invention further relates to a television stand including the glass plate.

Background Art

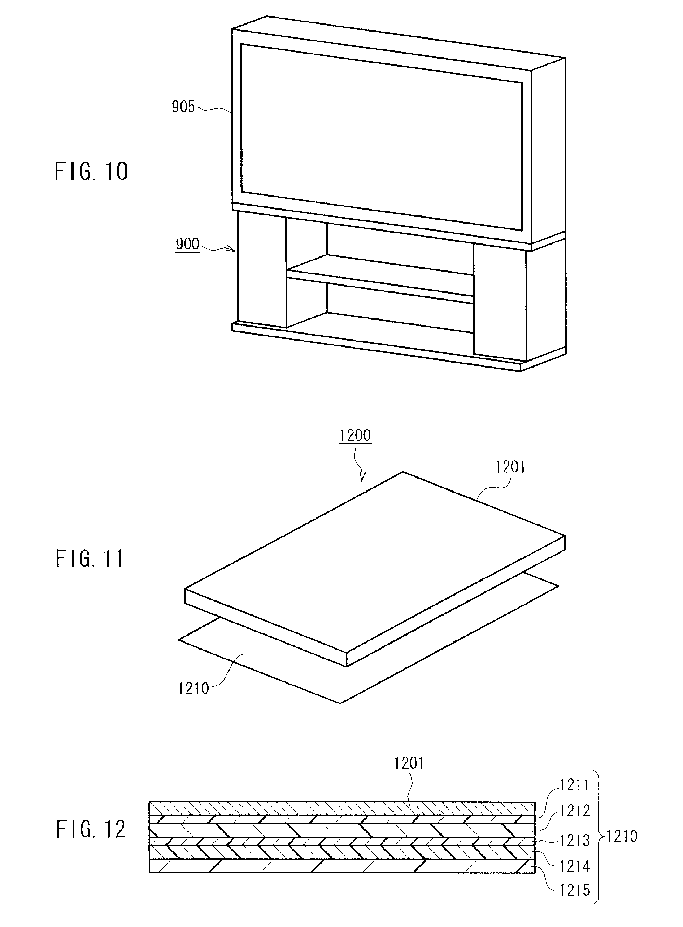

A conventional glass plate for use as a shelf plate or the like is described in, for example, JP 6 (1994)-21430U. FIG. 11 is an exploded perspective view of a conventional glass plate. FIG. 12 is a cross sectional view of the glass plate. As shown in FIG. 11, a glass plate 1200 includes a plate glass substrate 1201 and a coloring sheet 1210 attached to one surface of the glass substrate. For the purpose of improving impact resistance, heat resistance and a decorative effect such as a special color pattern or color stripe, the coloring sheet 1210 includes, as shown in FIG. 12, a transparent coating material mixture layer 1211, an unsaturated polyester resin material layer 1212 having high heat dissipation efficiency, an unsaturated polyester resin material layer 1213 having low heat dissipation efficiency, an unsaturated polyester resin material layer 1214 having high heat dissipation efficiency, and a reinforcing material layer 1215, which are laminated in this order from the glass substrate 1201.

Normally, glass is composed mainly of $SiO_2$ (silicic acid, silica sand, silica), $Na_2O$ (sodium oxide, soda) and CaO (calcium oxide, lime, calcia). $SiO_2$ accounts for 69 to 74% of glass. $Na_2O$, which functions to lower the melting point during melting, accounts for the next highest proportion of 12 to 16%, following $SiO_2$. CaO serves to improve the viscosity of glass at high temperatures as well as to enhance the electrical insulating property, and is an important component accounting for about several %.

Generally, glass often appears to be green. This is caused by an iron component that is present as an impurity in the raw material. In other words, iron, which causes the glass to appear to be green, exists in glass in the form of transition metal ions such as $Fe^{2+}$ and $Fe^{3+}$. According to the amount of the transition metal ions, the glass color ranges from blue to green. These colors appear because they absorb light in the visible light range when electrons move across an energy gap between the d orbitals of the transition metal ions (d-d transition).

Disclosure of Invention

Problem to be Solved by the Invention

However, there are users and local residents who feel that glass whose color is green looks cheap or who dislike the appearance. It is possible to add a dark color such as black directly to glass so as to suppress the color of green, but the transparency of the glass may be reduced, failing to provide a bright impression.

Also, particularly when a glass substrate is viewed from a direction substantially parallel to the substrate, its green color is likely to stand out at the end face.

As an example of glass that does not appear to be green, transparent plate glass is widely available, but it costs twice as much or more than ordinary plate glass. As a material other than glass that is used in a decorative table, television stand or the like, acrylic resin is used, but it is inferior to glass in terms of strength.

In view of the above, it is desired to develop a plate material, preferably a plate material for television stand, which is low cost and has a bright color, and whose green color is hardly noticeable and thus does not look cheap, but few attempts have been made so far to solve this problem.

The present invention has been made to solve the above-described problem encountered in the conventional technology. It is an object of the present invention to provide a glass plate whose color is hardly noticeable even when viewed from any direction, without the need to remove a component that imparts the color of glass (e.g., iron component) or to add an additional component to glass itself, that is, using existing plate glass.

It is another object of the present invention to provide a television stand using plate glass, but whose color is hardly noticeable and which is inexpensive and has an attractive appearance.

Means for Solving Problem

A glass plate of the present invention includes a plate glass substrate and a coloring layer laminated on one surface of the glass substrate, wherein the coloring layer includes a complementary color component that is a complementary color of a reflection spectrum of the glass substrate.

A television stand of the present invention includes the above-described glass plate of the present invention.

Effects of the Invention

The present invention is made by utilizing the fact that mixing of a color and its complementary color yields an achromatic color.

In other words, in the glass plate of the present invention, a coloring layer including a complementary color component that is the complementary color of the reflection spectrum of this glass substrate is laminated on one surface of an existing and widely-used glass substrate. Therefore, when the glass plate is viewed from a side opposite to the side to which the coloring layer is laminated, the color of the glass substrate hardly is visually recognizable, so the glass substrate appears virtually colorless and transparent.

Further, because the television stand of the present invention includes the above-described glass plate of the present invention, the color of the glass substrate hardly stands out, a desired color can be imparted to the glass plate, and thus the design value of the television stand can be improved in an inexpensive manner.

Brief Description of Drawings

[FIG. 1] FIG. 1 is an exploded perspective view showing the schematic configuration of a glass plate according to Embodiment 1 of the present invention.

[FIG. 2] FIG. 2 is an enlarged cross sectional view of a relevant part of the glass plate according to Embodiment 1 of the present invention.

[FIG. 3] FIG. 3 is a graph showing a relationship of the thickness of a glass substrate, the content of red component relative to the total of coloring components contained in a coloring component-containing layer of a coloring sheet, and the color of the glass substrate, for a glass plate according to Embodiment 1 of the present invention.

[FIG. 4] FIG. 4 is a diagram showing the schematic configuration of a measuring apparatus used to quantitatively measure the color of a glass plate in the present invention.

[FIG. 5A] FIG. 5A is a graph showing the spectral reflectance of Sample 1 of Embodiment 1 of the present invention.

[FIG. 5B] FIG. 5B is a graph showing the spectral reflectance in a wavelength range of 450 to 650 nm of Sample 1 of Embodiment 1 of the present invention.

[FIG. 6A] FIG. 6A is a graph showing the spectral reflectance of Sample 2 of Embodiment 1 of the present invention.

[FIG. 6B] FIG. 6B is a graph showing the spectral reflectance in a wavelength range of 450 to 650 nm of Sample 2 of Embodiment 1 of the present invention.

[FIG. 7A] FIG. 7A is a graph showing the spectral reflectance of Sample 3 of Embodiment 1 of the present invention.

[FIG. 7B] FIG. 7Bis a graph showing the spectral reflectance in a wavelength range of 450 to 650 nm of Sample 3 of Embodiment 1 of the present invention.

[FIG. 8A] FIG. 8A is an enlarged cross sectional view of a relevant part of a glass plate according to Embodiment 2 of the present invention.

[FIG. 8B] FIG. 8B is an enlarged cross sectional view of a relevant part of another glass plate according to Embodiment 2 of the present invention.

[FIG. 9] FIG. 9 is a perspective view of a television stand according to Embodiment 3 of the present invention.

[FIG. 10] FIG. 10 is a perspective view of the television stand according to Embodiment 3 of the present invention on which a television is mounted.

[FIG. 11] FIG. 11 is an exploded perspective view showing the schematic configuration of a conventional glass plate.

[FIG. 12] FIG. 12 is a cross sectional view of a relevant part of the conventional glass plate.

Description of the Invention

In the above-described glass plate of the present invention, it is preferable that the glass substrate is made of soda glass containing 0.07 to 0.18% of iron oxide. Thereby, as the glass substrate, existing and widely-used plate glass that is low in cost can be used.

It is preferable to satisfy $0.23x + 1.2 \leq y \leq 0.23x + 2.0$, where a thickness of the glass substrate is represented by x (mm), and a content of the complementary color component relative to the total of coloring components contained in the coloring layer is represented by y (%). This makes it further difficult to recognize visually the color of the glass substrate.

The coloring layer may have a plurality of layers. In this case, one of the plurality of layers may be a coloring component-containing layer containing all coloring components contained in the coloring layer. Thereby, because all coloring components are contained in one common layer, it is easy to adjust the amounts of coloring components.

The color of the glass plate may be silver when viewed from a side opposite to the side to which the coloring layer is laminated. In this case, it is preferable that the coloring layer includes aluminum as a silver component and titanium oxide as a white component. Thereby, it is possible to provide a silver glass plate that is bright and provides a good impression.

The coloring layer may have a plurality of layers. In this case, one of the plurality of layers may be an adhesive layer containing all coloring components contained in the coloring layer and an adhesive for attaching the coloring layer to the glass substrate. This reduces the number of coloring layers, and thus the production process can be simplified.

The coloring layer may have a plurality of layers. In this case, one of the plurality of layers may be an adhesive layer containing the complementary color component and an adhesive for attaching the coloring layer to the glass substrate, and another layer may be a coloring component-containing layer containing a coloring component other than the complementary color component. Thereby, a decorative pattern or the like can be formed on the coloring component-containing layer.

The coloring layer may have a plurality of layers. In this case, one of the plurality of layers may be a coating layer that contains the complementary color component and is formed on the glass substrate by a coating method. Thereby, a sheet having a desired color or a desired decorative pattern can be bonded to the coating layer, and thus freedom in designing the glass plate can be improved.

The coating method may be spraying or printing. Thereby, it is possible to form a coating layer containing the complementary color component at low cost.

It is preferable that the end face of the glass substrate is curved, chamfered or frosted. This makes it difficult to visually recognise the color of the glass substrate even when the glass plate is viewed from a direction substantially parallel to the glass plate.

Hereinafter, embodiments of the present invention will be described with reference to specific examples.

(Embodiment 1)

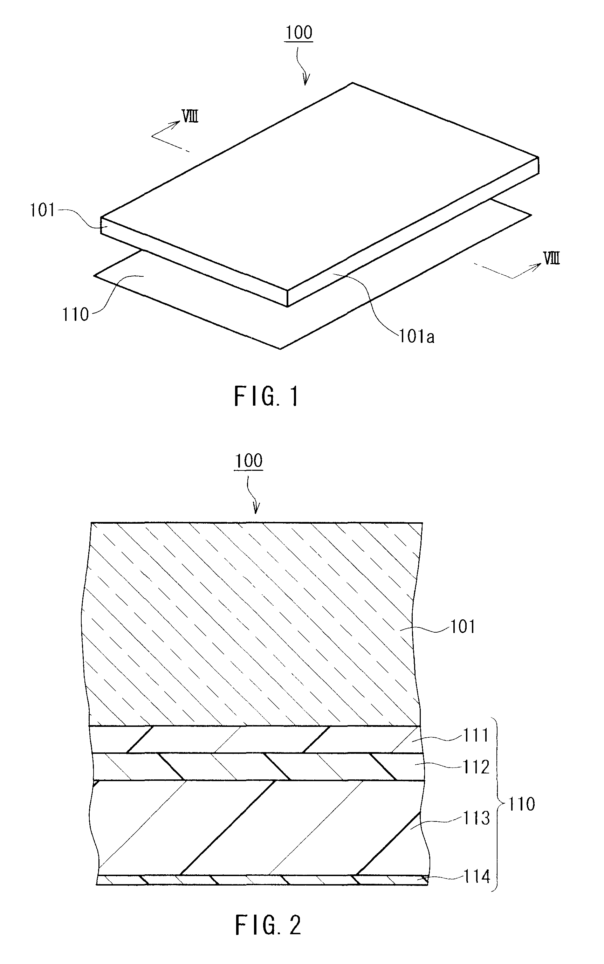

FIG. 1 is an exploded perspective view of a glass plate according to Embodiment 1 of the present invention. FIG. 2 is an enlarged cross sectional view of a relevant part of the glass plate according to Embodiment 1 of the present invention.

As shown in FIG. 1, a glass plate 100 according to this Embodiment 1 includes a 6 mm thick plate glass substrate 101, and a coloring sheet (coloring layer) 110 that is attached to the underside of the glass substrate 101 and contains pigments serving as coloring components. The coloring sheet 110 is a self-supporting sheet in a state before being applied to the glass substrate. As shown in FIG. 2, the coloring sheet 110 includes a 20 $\mu$m thick adhesive layer 111 made of an acrylic-based adhesive, a 13 $\mu$m thick coloring component-containing layer 112 in which coloring components are dispersed in an urethane-based resin, a 50 $\mu$m thick film layer 113 made from a polyester film, and a 2 $\mu$m thick hard coat layer 114 made of an acrylic-based resin, which are laminated in this order from the glass substrate 101.

The glass substrate 101 is made of soda lime glass manufactured by a float process. Although the blending ratio of the components differs slightly depending on country or manufacturer in which soda lime glass is manufactured, soda lime glass usually has a composition as shown in Table 1.

[Table 1]

|  | Content (%) |
|---|---|
| $SiO_2$ (silica) | 69 to 74 |
| $Al_2O_3$ (alumina) | 0 to 3 |
| CaO (calcium oxide) | 5 to 12 |
| MgO (magnesium oxide) | 0 to 6 |
| $Na_2O + K_2O$ (sodium oxide + potassium oxide) | 12 to 16 |
| $Fe_2O_3$ (iron oxide) | 0.07 to 0.18 |

In other words, the glass substrate contains 69 to 74% of $SiO_2$ (silica), 0 to 3% of $Al_2O_3$ (alumina), 5 to 12% of CaO (calcium oxide), 0 to 6% of MgO (magnesium oxide), 12 to 16% of $Na_2O + K_2O$ (sodium oxide + potassium oxide), and 0.07 to 0.18% of $Fe_2O_3$ (iron oxide). Among these components, $Fe_2O_3$ (iron oxide) contributes to making the glass substrate 101 appear green. The glass substrate 101 appears light green when the content of $Fe_2O_3$ (iron oxide) is around 0.07%, and appears dark green when the content is around 0.18%.

The coloring component-containing layer 112 of the coloring sheet 110 has the following composition: 14% of aluminum serving as a silver component, 11.5% of titanium oxide ($TiO_2$) serving as a white component, 0.85% of an insoluble azo pigment serving as a red component, 4% of a modified polyisocyanate serving as a curing agent, 5.5% of a pigment for providing gloss, 4.15% of an additive serving as a lubricant, and 60% of urethane resin. The blending ratio of each coloring component relative to the total of coloring components is as follows: silver component (aluminum): 53.2%, white component (titanium oxide): 43.6%, and red component (insoluble azo pigment): 3.2%. The silver component serves to determine the color of the glass plate 100 when viewed from the side opposite to the coloring sheet 110-attached side. The white component serves to suppress black cloudiness that aluminum has and to impart brightness to the color of the glass plate 100 when viewed from the side opposite to the coloring sheet 110-attached side. The red color of the red component is the complementary color of green that is the color of the glass substrate 101, and serves to make the green color of the glass substrate 101 difficult to notice, thereby making the glass substrate 101 appear colorless and transparent when the glass plate 100 is viewed from the side opposite to the coloring sheet 110-attached side.

The intensity of the green reflection spectrum of the glass substrate 101 changes according to the thickness of the glass substrate 101 and the content of the iron component in the glass substrate 101. Accordingly, the content of the red component serving as a complementary color component relative to the total of coloring components contained in the coloring component-containing layer 112 of the coloring sheet 110 can be changed according to the color of the glass substrate 101, that is, the thickness of the glass substrate 101 and the content of the iron component contained in the glass substrate 101.

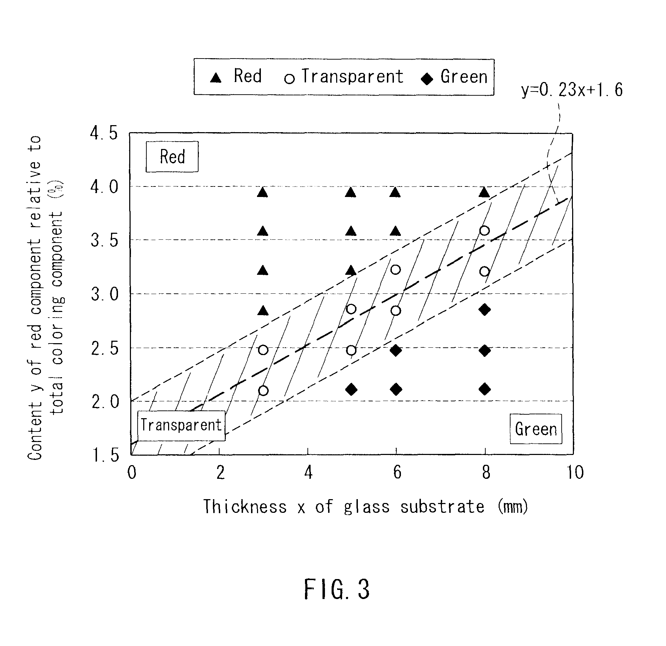

FIG. 3 is a graph showing a relationship of the thickness of the glass substrate 101, the content of the red component relative to the total of coloring components contained in the coloring component-containing layer 112, and the color of the glass substrate 101, for the glass plate 100 according to Embodiment 1 of the present invention. In FIG. 3, the vertical axis represents the content of the red component relative to the total of coloring components contained in the coloring component-containing layer 112 of the coloring sheet 110, and the horizontal axis represents the thickness of the glass substrate 101. The content of the red component and the thickness of the glass substrate 101 were changed to various values, and the color of the glass substrate 101 when viewed from the side opposite to the coloring sheet 110-attached side was rated as "red", "transparent" or "green".

As shown in FIG. 3, when the spectral intensity of the green of the glass substrate 101 and that of the red of the coloring component-containing layer 112 are balanced, the glass substrate 101 appears colorless and transparent when viewed from the side opposite to the coloring sheet 110-attached side.

When the thickness of the glass substrate 101 is increased, the spectral intensity of the green of the glass substrate 101 increases, and therefore the glass substrate 101 appears green when viewed from the side opposite to the coloring sheet 110-attached side. When the thickness of the glass substrate 101 is decreased, the spectral intensity of the green of the glass substrate 101 decreases, and therefore the glass substrate 101 appears red when viewed from the side opposite to the coloring sheet 110-attached side.

When the content of the red component relative to the total of coloring components contained in the coloring component-containing layer 112 is increased, the spectral intensity of the red of the coloring component-containing layer 112 increases, and therefore the glass substrate 101 appears red when viewed from the side opposite to the coloring sheet 110-attached side. When the content of the red component relative to the total of coloring components contained in the coloring component-containing layer 112 is decreased, the spectral intensity of the red of the coloring component-containing layer 112 decreases, and therefore the glass substrate 101 appears green when viewed from the side opposite to the coloring sheet 110-attached side.

The foregoing indicates that, when the thickness of the glass substrate 101 is represented by x (mm), the content of the red component relative to the total of coloring components contained in the coloring component-containing layer 112 of the coloring sheet 110 is represented by y (%), and the thickness x and the content y fall within the region defined by oblique lines in FIG. 3, that is, they satisfy the relationship represented by the following expression (1), the glass substrate 101 appears virtually colorless and transparent when viewed from the side opposite to the coloring sheet 110-attached side.

$$0.23x + 1.2 \leq y \leq 0.23x + 2.0 \cdots (1)$$

For example, a coloring sheet 110 having a content y of the red component of 2.29 $\pm$ 0.4% is attached to a glass substrate 101 having a thickness x of 3 mm. A coloring sheet 110 having a content y of the red component of 2.75 $\pm$ 0.4% is attached to a glass substrate 101 having a thickness x of 5 mm. A coloring sheet 110 having a content y of the red component of 2.98 $\pm$ 0.4% is attached to a glass substrate 101 having a thickness x of 6 mm. A coloring sheet 110 having a content y of the red component of 3.44 ± 0.4% is attached to a glass substrate 101 having a thickness x of 8 mm. In any of the above cases, the glass substrate appears colorless and transparent when viewed from the side opposite to the coloring sheet 110-attached side.

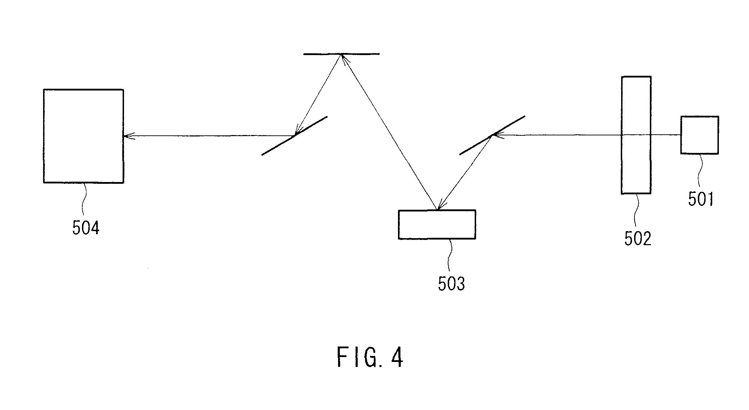

The feature of the present invention to suppress the glass substrate 101 from appearing green was measured quantitatively. FIG. 4 shows the schematic configuration of a measuring apparatus used. This measuring apparatus is a spectrophotometer (UV3150) available from Shimadzu Corporation, and includes a halogen lamp 501 as a light source, a diffraction grating 502, a sample or calibration mirror 503, and a photomultiplier 504. The reflectance when a calibration mirror 503 was used for calibration instead of a sample was set to 100%.

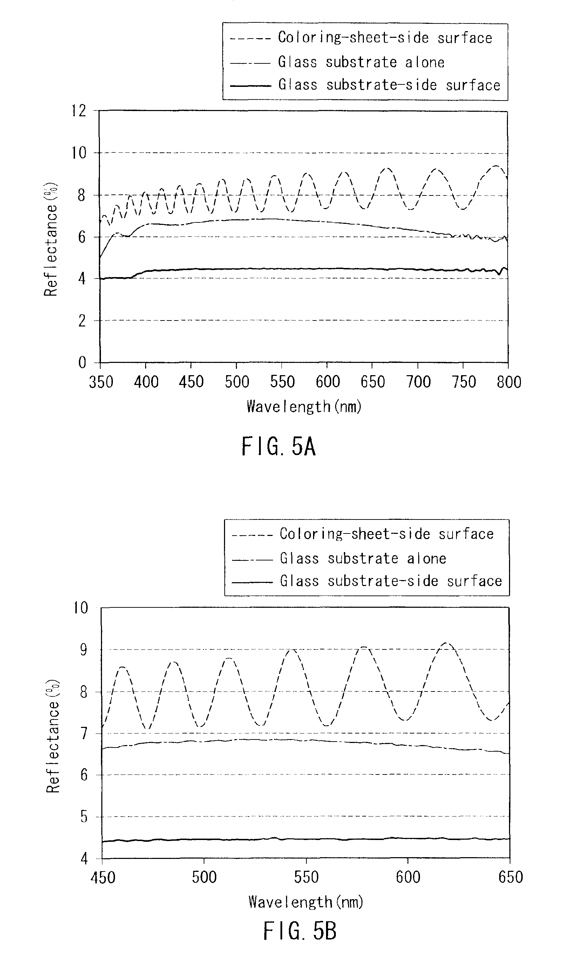

FIGS. 5A and 5B are graphs showing the spectral reflectance of Sample 1 of Embodiment 1 of the present invention. In each graph, the vertical axis represents the reflectance, and the horizontal axis represents the wavelength. The dotted line indicates the spectral reflectance of the coloring sheet 110 side-surface of the glass plate 100 in which the coloring sheet 110 is attached to one surface of the glass substrate 101. The dash dotted line indicates the spectral reflectance of the glass substrate 101 alone. The solid line indicates the spectral reflectance of the glass substrate 101 side-surface of the glass plate 100 in which the coloring sheet 110 is attached to one surface of the glass substrate 101. FIG. 5A shows the spectral reflectances in the measured wavelength range ranging from 350 to 800 nm. FIG. 5B is an enlarged graph showing the spectral reflectances in the visible light range of FIG. 5A ranging from a wavelength of 450 to 650 nm, so as to clearly show the green reflection spectrum. The glass plate 100 used for measurement included a 6 mm thick glass substrate 101 and a coloring sheet 110 attached to one surface of the glass substrate 101 and having a coloring component-containing layer 112 containing 3.2% of red component relative to the total of coloring components.

The glass substrate 101 alone, to which the coloring sheet 110 was not attached, exhibited a high reflectance in the green wavelength band ranging from a wavelength of 500 to 600 nm, and the reflectance curve has a mountain-like shape having a peak within this range. This quantitatively indicates that the glass substrate 101 appears green.

In contrast, the reflectance curve of the glass substrate 101-side surface of the glass plate 100 in which the coloring sheet 110 was attached to the glass substrate 101 does not have a mountain-like shape having a peak within the green wavelength band ranging from a wavelength 500 to 600 nm. This quantitatively indicates that the attachment of the coloring sheet 110 suppresses the glass substrate 101 from appearing green. In other words, the green spectrum reflected by the glass substrate 101 and the red spectrum reflected by the coloring sheet 110 are combined, and thereby the glass substrate 101 appears virtually colorless and transparent.

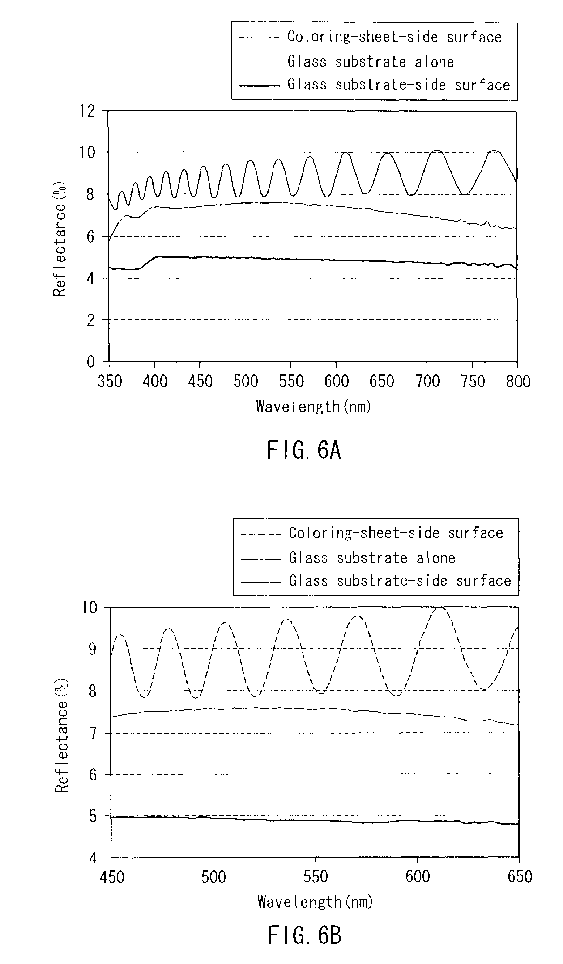

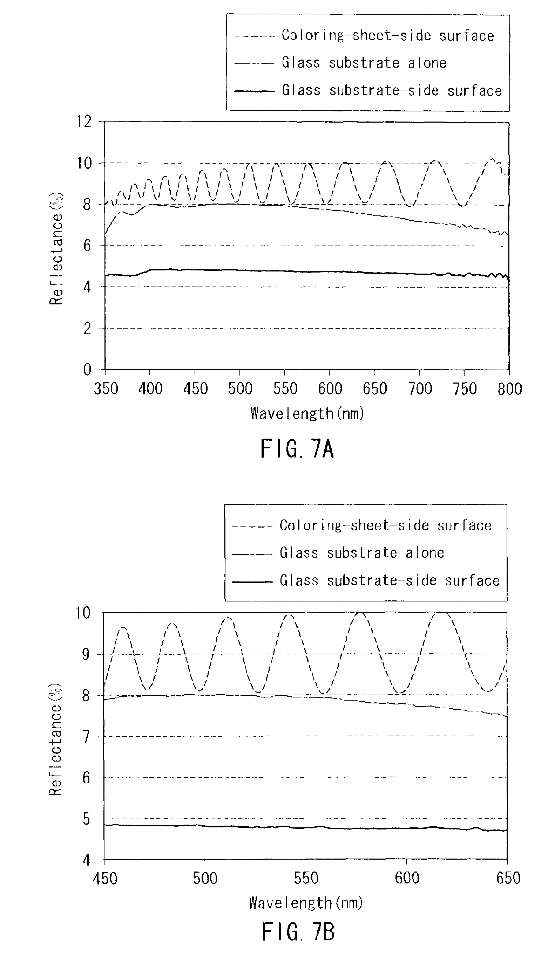

Samples 2 and 3, which were obtained using glass substrates 101 different from that of Sample 1 in production area and degree of green, were measured for spectral reflectance in the same manner as Sample 1. FIG. 6A is a graph showing the spectral reflectance of Sample 2 in the measured wavelength range ranging from 350 to 800 nm. FIG. 6B shows an enlarged graph showing the spectral reflectance in visible light range of FIG. 6A ranging from a wavelength of 450 to 650 nm, so as to clearly show the green reflection spectrum. FIG. 7A is a graph showing the spectral reflectance of Sample 3 in the measured wavelength range ranging from 350 to 800 nm. FIG. 7B shows an enlarged graph showing the spectral reflectance in visible light range of FIG. 7A ranging from a wavelength 450 to 650 nm, so as to clearly show the green reflection spectrum. In each graph, the vertical axis represents the reflectance, and the horizontal axis represents the wavelength. The dotted line indicates the spectral reflectance of the coloring sheet 110-side surface of the glass plate 100 in which the coloring sheet 110 is attached to one surface of the glass substrate 101. The dash dotted line indicates the spectral reflectance of the glass substrate 101 alone. The solid line indicates the spectral reflectance of the glass substrate 101 side-surface of the glass plate 100 in which the coloring sheet 110 is attached to one surface of the glass substrate 101.

The reflectance peak of the glass substrate 101 alone, to which the coloring sheet 110 was not attached, was observed. For Sample 1, the reflectance peak was 6.8% at a wavelength of about 550 nm. For Sample 2, the reflectance peak was 7.5% at a wavelength of about 525 nm. For Sample 3, the reflectance peak was 8.0% at a wavelength of about 500 nm. As described, Samples 1, 2 and 3 had different reflectance peak values and different wavelengths at which the reflectance peak values were obtained. However, Samples 1, 2 and 3 shared a common feature that when the spectral reflectance of the glass substrate 101-side surface of the glass plate 100 in which the coloring sheet 110 was attached to the glass substrate 101 was observed, no peak value was obtained in the green wavelength band, and therefore the glass substrate 101 appeared virtually colorless and transparent.

As described above, because, in the glass plate 100 of this embodiment, a coloring sheet 110 containing a red component, which is the complementary color of green, which is the color of the glass substrate 101, is attached on one surface of a glass substrate 101 made of soda glass that is already available and widely used, the green reflection spectrum of the glass substrate 101 can be cancelled out by the red reflection spectrum of the coloring sheet 110. As a result, the glass substrate 101 can appear virtually colorless and transparent.

The glass plate 100 of the present invention is not limited to the above, and it is possible to make appropriate modifications according to the application, production and the like.

For example, the above example discusses a configuration in which the color of the glass substrate 101 is green and the coloring sheet 110 contains a red component, but the color of the glass substrate 101 is not limited to green, and may be a color other than green. No matter what color the color of the glass substrate 101 is, the glass substrate 101 can be made appear virtually colorless and transparent by laminating, on one surface of the glass substrate 101, a coloring sheet containing a complementary color component that is the complementary color of the reflection spectrum of the glass substrate 101.

The above embodiment illustrates a configuration in which, in order to make the glass plate 100 appear silver when viewed from the side opposite to the coloring sheet 110-attached side, the coloring component containing layer 112 of the coloring sheet 110 contains, in addition to the red component as a complementary color component, aluminum as a silver component and titanium oxide as a white component, but coloring components other than the complementary color component (hereinafter referred to as "non-complementary color components") can be selected freely according to a desired color of the glass plate 100. Because the coloring sheet 110 that is attached to one surface of the glass substrate 101 contains a complementary color component, when the coloring sheet 110 contains a non-complementary color component(s), regardless of the color of the non-complementary color component(s), the glass plate 100 can appear as a pure color of the non-complementary color component(s), in which the color of the glass substrate 101 is not mixed, when the glass plate 100 is viewed from the side opposite to the coloring sheet 110-attached side. The coloring sheet 110 may not necessarily contain a non-complementary color component. In this case, the glass plate 100 can appear colorless and transparent without the color of the glass substrate 101 being recognized.

In the above examples, all coloring components of the coloring sheet 110 are contained in the coloring component-containing layer 112, but all coloring components may be contained in the adhesive layer 111 including an adhesive, and the coloring component-containing layer 112 may be omitted. Thereby, in the production process of the coloring sheet 110, the step of forming the coloring component-containing layer 112 can be omitted.

In the above examples, all coloring components of the coloring sheet 110 are contained in the coloring component-containing layer 112, but a configuration is also possible in which a complementary color component is contained in the adhesive layer 111 and a non-complementary color component(s) is contained in the coloring component-containing layer 112. Thereby, the complementary color component of the adhesive layer 111 cancels out the color of the glass substrate 101, making the glass substrate 101 appear virtually colorless and transparent, and making the color of the non-complementary color component(s) of the underlying coloring component-containing layer 112 appear through the glass substrate 101. Accordingly, for example, as a component-containing layer 112, a decorative pattern or the like formed using a plurality of coloring components can be formed on the film layer 113 by printing or the like.

In the above examples, the coloring sheet 110 having self-supporting capability and containing a complementary color component and non-complementary color components is attached to the glass substrate 101 with the adhesive layer 111 interposed therebetween, but the present invention is not limited thereto. It is also possible to, for example, apply a complementary color component onto one surface of the glass substrate 101, and then attach a coloring sheet 110 containing a non-complementary color component(s) thereto with an adhesive layer 111 interposed therebetween. According to this configuration, in the step of applying a complementary color component, the amount of the complementary color (or the application thickness) can be adjusted while checking the transparency and color of the glass substrate 101, and therefore it is possible to cope easily with the production of various types in small quantities in which glass substrates 101 of different thicknesses and different colors are used. As the method for applying the complementary color component, any conventional method can be used such as spraying or printing.

(Embodiment 2)

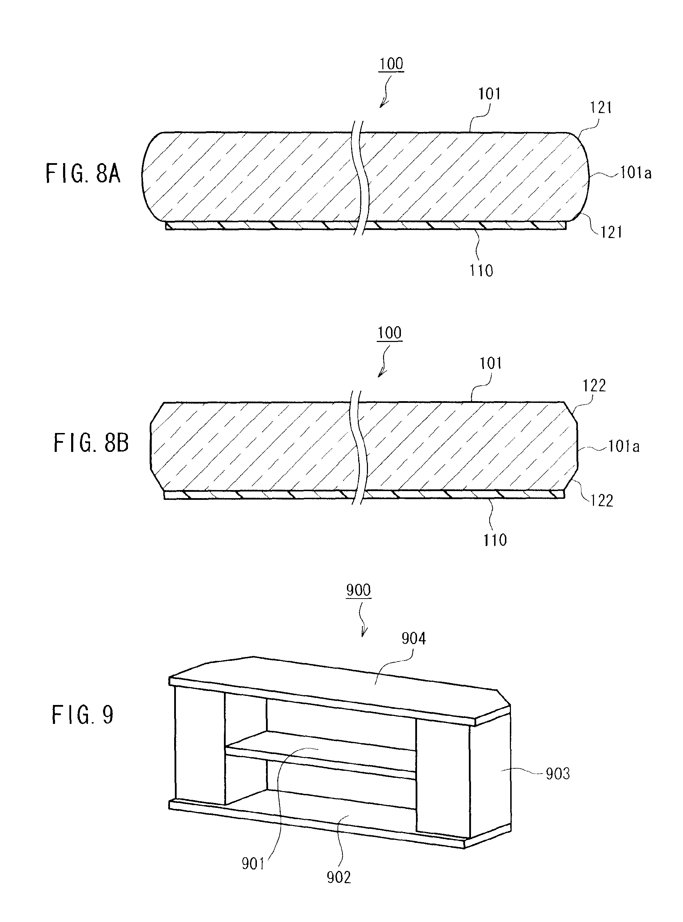

FIGS. 8A and 8B are enlarged cross sectional views of relevant parts of glass plates 100 according to Embodiment 2 of the present invention, taken along a line corresponding to the line VIII-VIII in FIG. 1. In FIG. 8A, curves 121 are formed in the end face 101a of a glass substrate 101 such that the end face 101a has a substantially cylindrical surface. In FIG. 8B, chamfers 122 are formed at the edges of the end face of a glass substrate 101. As used herein, "end face" refers to a surface of a glass substrate 101 other than the surface to which a coloring sheet 110 is attached and the surface opposite to the coloring sheet 110-attached surface.

The color of a glass substrate 101 (e.g., green) tends to stand out at the end face 101a when the glass substrate 101 is viewed from a direction substantially parallel to the glass substrate 101. When curves 121 as shown in FIG. 8A or chamfers 122 as shown in FIG. 8B are formed in the end face 101a of a glass substrate 101, the light incident into the end face 101a from the inside of the glass substrate 101 is diffusely reflected by the end face 101a, so the incident light is unlikely to be emitted to the outside of the glass substrate 101. Therefore, the color of the glass substrate 101 can be made difficult to see also at the end face 101a of the glass substrate 101.

As described above, according to this embodiment, curves 121 or chamfers 122 are formed in the end face 101a of a glass substrate 101, and thus the green spectrum incident into the end face 101a from the inside of the glass substrate 101 is diffusely reflected, preventing the green spectrum from being emitted from the end face 101a to the outside of the glass substrate 101. Accordingly, also when the glass plate 100 is viewed from a direction substantially parallel to the glass plate 100, the color of the glass substrate 101 can be made difficult to be visually recognized.

In FIGS. 8A and 8B, the end face 101a of the glass substrate 101 may further be subjected to a frosting process (surface-roughening process). In this case, the light incident into the end face 101 from the inside of the glass substrate 101 is more diffusely reflected by the end face, and thus the color of the glass substrate 101 can be made further difficult to be visually recognized.

It is also possible to subject the end face 101a of a glass substrate 101 to a frosting process (surface-roughening process) without forming the curves 121 or chamfers 122. In this case also, the light incident into the end face 101a from the inside of the glass substrate 101 is diffusely reflected by the end face 101a, and thus the color of the glass substrate 101 can be made difficult to be visually recognized.

(Embodiment 3)

FIG. 9 is a perspective view of a television stand 900 including the glass plate 100 of the present invention. In FIG. 9, a television stand 900 includes an intermediate plate 901, a bottom plate 902, side plates 903 and a top plate 904. FIG. 10 is a perspective view of the television stand 900 on which a television 905 is mounted. As shown in FIG. 10, the television 905 is mounted on the top plate 904 of the television stand 900. The intermediate plate 901, the bottom plate 902 and the top plate 904 may be the same size or different sizes.

At least one of the plate components of the television stand 900 is the above-described glass plate 100 of the present invention. Preferably, at least one of the shelf plates is the above-described glass plate 100 of the present invention. As used herein, "shelf plates" refer to, as is clear from FIGS. 9 and 10, plate components for mounting an object thereon. In the television stand 900 of FIG. 9, the intermediate plate 901, the bottom plate 902 and the top plate 904 correspond thereto.

Because the television stand 900 includes the glass plate 100 of the present invention, although a glass substrate 101 is used, its color does not stand out, and thus it is possible to provide a television stand 900 that is bright and luxurious at low cost. Further, by containing a non-complementary color component(s), the design value of the television stand 900 can be improved.

Although FIGS. 9 and 10 illustrate a configuration in which the glass plate 100 of the present invention is used as a component of a television stand 900, the glass plate 100 of the present invention can be used as a component of various furniture items (e.g., table, shelf, stand, etc.) (preferably, as a shelf plate) other than a television stand.

It is to be understood that the embodiments described above are intended to clarify the technical content of the present invention, and thus the present invention should not be construed as limited to the specific embodiments given above. Various modifications and changes can be made within the spirit and scope of the present invention as defined by the appended claims, and therefore the present invention should be construed broadly.

Industrial Applicability

In the glass plate of the present invention, the color of the glass substrate is hardly visible, so the glass substrate appears virtually colorless and transparent. Accordingly, the present invention is applicable to various furniture items such as a television stand and a decorative table.

**Claims**

1. A glass plate comprising a plate glass substrate and a coloring layer laminated on one surface of the glass substrate, wherein the coloring layer includes a complementary color component that is a complementary color of a reflection spectrum of the glass substrate.

2. The glass plate according to claim 1, wherein the glass substrate comprises soda glass containing 0.07 to 0.18% of iron oxide.

3. The glass plate according to claim 2, wherein the following expression is satisfied,

$$0.23x + 1.2 \leq y \leq 0.23x + 2.0 \quad \cdots (1),$$

where a thickness of the glass substrate is represented by x (mm), and a content of the complementary color component relative to the total of coloring components contained in the coloring layer is represented by y (%).

**4.** The glass plate according to claim 3,
wherein the coloring layer has a plurality of layers, and
one of the plurality of layers is a coloring component-containing layer containing all coloring components contained in the coloring layer.

**5.** The glass plate according to claim 3,
wherein the color of the glass plate is silver when viewed from a side opposite to the side to which the coloring layer is laminated, and
the coloring layer includes aluminum as a silver component and titanium oxide as a white component.

**6.** The glass plate according to claim 3,
wherein the coloring layer has a plurality of layers, and
one of the plurality of layers is an adhesive layer containing all coloring components contained in the coloring layer and an adhesive for attaching the coloring layer to the glass substrate.

**7.** The glass plate according to claim 3,
wherein the coloring layer has a plurality of layers,
one of the plurality of layers is an adhesive layer containing the complementary color component and an adhesive for attaching the coloring layer to the glass substrate, and
another layer is a coloring component-containing layer containing a coloring component other than the complementary color component.

**8.** The glass plate according to claim 3,
wherein the coloring layer has a plurality of layers, and
one of the plurality of layers is a coating layer containing the complementary color component and being formed on the glass substrate by a coating method.

**9.** The glass plate according to claim 8,
wherein the coating method is spraying.

**10.** The glass plate according to claim 8,
wherein the coating method is printing.

**11.** The glass plate according to claim 3,
wherein the end face of the glass substrate is curved, chamfered or frosted.

**12.** A television stand comprising the glass plate according to claim 3.

100

VIII

101

110

VIII

101a

FIG. 1

100

101

111
112
113
114
110

FIG. 2

FIG. 3

FIG. 4

FIG. 5A

FIG. 5B

FIG. 6A

FIG. 6B

FIG. 7A

FIG. 7B

FIG. 8A

FIG. 8B

FIG. 9

FIG. 10

905

900

FIG. 11

1200

1201

1210

FIG. 12

1201

1211
1212
1213
1214
1215

1210

<div style="text-align: center;">**INTERNATIONAL SEARCH REPORT**</div>

| | International application No. |
|---|---|
| | PCT/JP2006/305570 |

A. CLASSIFICATION OF SUBJECT MATTER
*C03C17/23*(2006.01), *C03C17/34*(2006.01), *B32B17/00*(2006.01), *A47B81/06*
(2006.01), *A47B96/20*(2006.01), *A47B13/08*(2006.01)

According to International Patent Classification (IPC) or to both national classification and IPC

B. FIELDS SEARCHED

Minimum documentation searched (classification system followed by classification symbols)
A47B13/08, A47B81/06, A47B96/20, B32B17/00, C03C17/23, C03C17/34

Documentation searched other than minimum documentation to the extent that such documents are included in the fields searched
Jitsuyo Shinan Koho        1922-1996   Jitsuyo Shinan Toroku Koho  1996-2006
Kokai Jitsuyo Shinan Koho  1971-2006   Toroku Jitsuyo Shinan Koho  1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 9-301743 A (Nippon Sheet Glass Co., Ltd.),<br>25 November, 1997 (25.11.97),<br>Claim 1; Par. Nos. [0004] to [0006], [0009],<br>[0010], [0034], [0037]; Table 4<br>(Family: none) | 1-11<br>12 |
| Y | JP 8-173257 A (Kabushiki Kaisha Asahi),<br>09 July, 1996 (09.07.96),<br>Par. No. [0018]; Figs. 1 to 3<br>(Family: none) | 12 |
| A | JP 2003-306346 A (Nippon Paint Co., Ltd.),<br>28 October, 2003 (28.10.03),<br>Claim 1; Par. No. [0008]<br>(Family: none) | 1-12 |

☐ Further documents are listed in the continuation of Box C.   ☐ See patent family annex.

| | |
|---|---|
| * Special categories of cited documents:<br>"A" document defining the general state of the art which is not considered  to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 April, 2006 (17.04.06) | Date of mailing of the international search report<br>25 April, 2006 (25.04.06) |
|---|---|
| Name and mailing address of the ISA/<br>Japanese Patent Office | Authorized officer |
| Facsimile No. | Telephone No. |

Form PCT/ISA/210 (second sheet) (April 2005)

**EP 1 876 151 A1**

## REFERENCES CITED IN THE DESCRIPTION

**Patent documents cited in the description**

- JP 6021430 U